Europäisches Patentamt

**European Patent Office**

Office européen des brevets

(11) Numéro de publication: **0 105 069**
**A1**

(12) ## DEMANDE DE BREVET EUROPEEN

(21) Numéro de dépôt: **82401819.6**

(22) Date de dépôt: **05.10.82**

(51) Int. Cl.³: **B 25 J 9/00**

(43) Date de publication de la demande: **11.04.84**
**Bulletin 84/15**

(84) Etats contractants désignés: **AT BE CH DE GB IT LI LU NL SE**

(71) Demandeur: **Société PHAREMME, Les Nouhauts, F-87370 Saint-Sulpice-Lauriere Haute-Vienne (FR)**

Demandeur: **INSTITUT UNIVERSITAIRE DE TECHNOLOGIE DE LIMOGES, Allée André Maurois, F-87065 Limoges Cédex Haute-Vienne (FR)**

(72) Inventeur: **Coussot, Serge, Le Moulin des Vergnes, F-87370 Bersac-sur-Rivalier Haute-Vienne (FR)**
Inventeur: **Mouffetard, Eric, L'Espérance, F-87370 St-Sulpice Lauriere Haute-Vienne (FR)**
Inventeur: **Pelletier, Vincent, 43, avenue des Casseaux, F-87000 Limoges Haute-Vienne (FR)**
Inventeur: **Poumeyrol, Serge, F-87370 St-Sulpice-Lauriere Haute-Vienne (FR)**
Inventeur: **Siegler Pascal de Falticeni, Jean-Luc, 8, Avenue du Président Coty, F-87100 Limoges (FR)**
Inventeur: **Couderc, Robert, La Boilerie, F-87430 Verneuil-sur-Vienne Haute-Vienne (FR)**
Inventeur: **Berland, Richard, Rue des Pendants, F-87100 Limoges Haute-Vienne (FR)**
Inventeur: **Roux, Serge, 9, Avenue Vincent Auriol, F-87100 Limoges Haute-Vienne (FR)**

(74) Mandataire: **Chevallier, Robert Marie Georges, Cabinet BOETTCHER 23, rue La Boétie, F-75008 Paris (FR)**

(54) **Robot de manipulation.**

(57) Le corps (3) du robot est creux et monté rotatif sur un socle fixe (1), il contient un joint tournant auquel aboutissent des canalisations (22) de fluide sous pression et des câbles électriques (21), l'ensemble des circuits électroniques de commande et de contrôle étant placé à l'intérieur du corps creux (3) en arrière d'un tableau (28) accessible sur un côté du corps (3) et rassemblant l'ensemble des moyens de commande et de programmation du robot.

EP 0 105 069 A1

ACTORUM AG

L'invention a pour objet un robot de manipulation d'un type nouveau en ce sens qu'il est apte, de par sa conception, à effectuer au moins un tour complet de 360° sur lui-même et, même, de faire plusieurs tours ou un nombre quelconque de tours dans un sens ou dans l'autre.

Les robots de manipulation sont de plus en plus utilisés en association avec des machines de production pour alimenter celles-ci en pièces à travailler et pour les décharger des pièces qui ont été travaillées. Il est fréquent qu'un même robot serve plusieurs machines ou plusieurs postes de travail d'une machine. Dans ce cas, le robot comprend une partie tournante autour d'un axe vertical à partir duquel s'étend latéralement un bras équipé d'un moyen de préhension approprié. Pour servir les différents postes, le robot tourne à chaque fois d'un certain angle mais il lui est impossible de faire un tour complet de sorte que, lorsqu'il a servi plusieurs postes de travail successifs, pour revenir au premier poste il est contraint de tourner en sens inverse. Il recommence alors le service des postes successifs puis il revient à nouveau en arrière. Dans bien des circonstances, le mouvement de retour du robot demande un temps plus long que l'intervalle de temps entre le service du dernier poste et celui du premier poste, ce qui fait que le retour du robot est une cause de ralentissement du cycle de production.

L'invention a pour but principal d'apporter un robot capable d'assurer le service de plusieurs postes de travail successifs sans être obligé de revenir en arrière.

D'autre part, on sait que les mouvements des robots sont commandés par des circuits électroniques qui sont sensibles aux parasites extérieurs.

L'invention a également pour but, simultanément à la possibilité de faire tourner un robot sur lui-même sans retour nécessaire en arrière, d'apporter grâce à la conception qui permet ce résultat, une protection contre les parasites notablement supérieure à celle que l'on connait avec les robots classiques.

0105069

Un robot selon l'invention comprend un socle fixe ayant un axe géométrique principal, de préférence vertical, sur lequel est monté tournant autour de cet axe un corps creux ayant à son extrémité opposée au socle une paroi transversale de fermeture qui sert au montage d'un bras de manipulation.

De préférence le socle est composé d'une partie fixe ayant une ouverture centrale et d'une partie tournante ayant aussi une ouverture centrale, ces deux parties étant réunies par l'intermédiaire d'un roulement à billes. La partie fixe est ancrée au sol et la partie tournante sert au montage du corps creux, concentriquement à l'axe géométrique principal.

Le corps creux et tournant contient un joint tournant multiple; ce joint comprend un fourreau fixe s'étendant à partir de la partie fixe du socle concentriquement à l'axe géométrique et un manchon extérieur calé en rotation avec le corps tournant. A leur interface, le fourreau fixe et le manchon tournant sont pourvus de moyens de circulation d'un fluide hydraulique et/ou pneumatique et de moyens de transmission de courants électriques.

Le corps creux a une dimension suffisante pour contenir en plus du joint tournant multiple la totalité ou la quasi totalité des circuits électroniques du robot. Le socle fixe sert au passage des tubulures des circuits hydrauliques et/ou pneumatiques et des câbles électriques. Ces tubulures et ces câbles s'étendent à l'intérieur du fourreau fixe jusqu'à un emplacement approprié sur le joint tournant.

De préférence le bras de manipulation est monté pivotant autour d'un axe supporté par les deux branches d'une chape et celle-ci est fixée à la face extérieure de la paroi transversale du corps creux en position excentrée par rapport à l'axe géométrique.

On donnera maintenant sans intention limitative une description d'un exemple de réalisation de l'invention. On se reportera aux dessins annexés danslesquels :

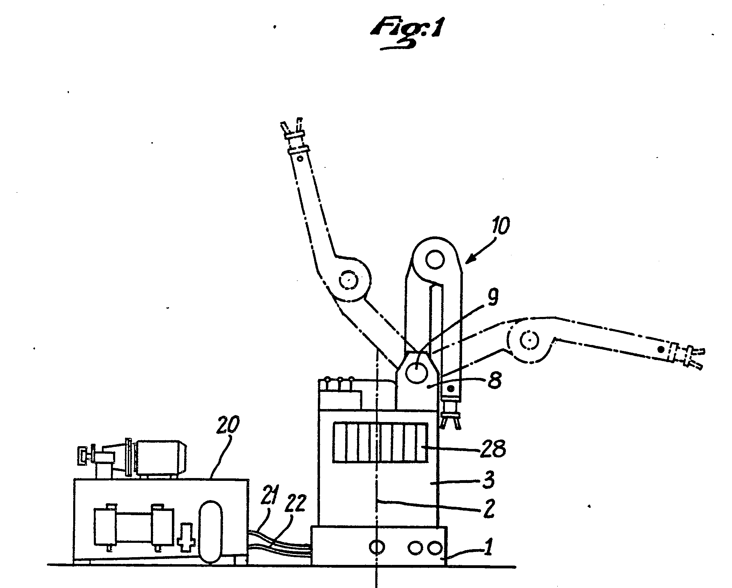

- la figure 1 est une vue de côté en élévation d'un robot de manipulation conforme à l'invention.

- la figure 2 est une vue agrandie en coupe par un plan passant par l'axe géométrique principal du socle et du corps du robot de la figure 1.

Un robot conforme à l'invention comprend un socle fixe 1 ayant un axe géométrique principal 2 qui est l'axe autour duquel tourne le robot. Sur ce socle fixe 1 est monté tournant autour de l'axe 2 un corps creux 3. De préférence, le socle 1 comprend une première partie annulaire 4 A qui est fixe et une seconde partie annulaire 4B qui a une ouverture centrale 5 et qui est libre en rotation autour de l'axe géométrique 2 . Cette seconde partie tournante 4B sert au montage du corps creux 3 concentriquement à l'axe 2. Les deux parties annulaires  4A, 4B sont réunies par l'intermédiaire d'un roulement à billes 6.

Le corps creux 3 est terminé à son extrémité opposée au socle 1 par une paroi transversale 7 sur la face extérieure de laquelle est fixée une chape 8. De préférence celle-ci est excentrée par rapport à l'axe général 2. Entre les deux branches de cette chape 8 est supporté un axe 9 autour duquel est monté pivotant un bras 10.

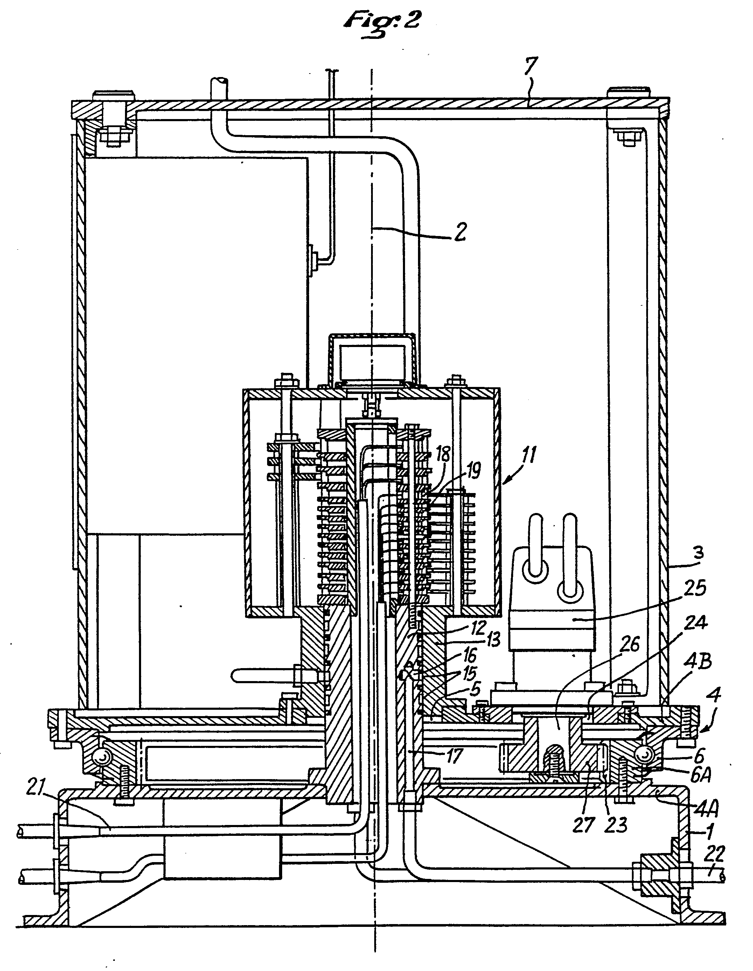

Le corps creux 3 contient un joint tournant multiple désigné par la référence générale 11 sur la figure 2. Ce joint tournant 11 comprend un fourreau 12 qui est fixe par suite de sa fixation à la première partie fixe 4A du socle 1. Ce fourreau 12 s'étend à travers l'ouverture centrale 5 et il est entouré d'un manchon 13 qui est mobile en rotation par suite de sa fixation à la seconde partie tournante 4B du socle 1. L'ensemble est concentrique à l'axe géométrique 2.

A l'interface entre le fourreau fixe 12 et le manchon tournant 13 se trouvent des moyens connus en soi de circulation d'un fluide hydraulique et/ou pneumatique et des moyens de transmission de courants électriques. Par exemple, il existe des gorges annulaires 15 associées à des canaux radiaux 16 et longitudinaux 17 pour les fluides hydrauliques et/ou pneumatiques et des bagues conductrices 18 associées à des balais 19 pour les courants électriques.

Un bloc de fourniture d'énergie 20 est placé à proximité du robot. Des câbles électriques 21 et des canalisations 22 de fluide pénètrent dans la première partie fixe 4A du socle 1 en traversant la paroi latérale de ce dernier. Les câbles électriques s'étendent ensuite à l'intérieur du fourreau fixe 12 jusqu'aux bagues 18 et les canalisations de fluide aboutissent à des canaux longitudinaux 17 forés dans l'épaisseur du fourreau 12.

De préférence la bague intérieure 6A du roulement à billes 6 qui est fixée à la première partie fixe 4A du socle 1 est pourvue d'une denture intérieure 23. Une ouverture 24 est ménagée dans la paroi de la seconde partie mobile 4B et un moteur électrique 25 est fixé au-dessus de cette ouverture de façon que son arbre 26 s'étende à proximité de la denture 23. Un pignon denté 27 qui engrène avec cette dernière est calé en rotation sur l'arbre 26.

De cette façon, le corps 3 du robot est entraîné en rotation par le moteur 25. Il peut accomplir un tour complet, et, en réalité, tourner indéfiniment autour de l'axe géométrique 2 sans jamais être contraint de revenir en arrière. Ceci n'empêche pas que le robot puisse tourner tantôt dans un sens, tantôt dans le sens opposé lorsqu'il est plus rapide pour lui d'inverser son sens de rotation plutôt que de continuer dans le même sens pour passer d'un poste de travail à un autre poste de travail.

Le corps creux 3 a un volume intérieur suffisant pour contenir en plus du joint tournant 11 tous les circuits électroniques qui contiennent en mémoire, qui commandent et qui contrôlent les divers mouvements du robot et notamment du bras 10. Ce dernier est doté d'un avant-bras oscillant 10 A prolongé par un poignet pivotant 10 B qui est lui-même pourvu d'une pince 10 C oscillante, pivotante et serrante. Cet ensemble est décrit dans la demande de brevet français N° 81 13 988 . Dans le présent exemple, pour permettre l'exécution de ces mouvements, le joint tournant 11 est équipé de 9 bagues collectrices 19 pour l'électricité et de 2 gorges 15 pour le fluide hydraulique.

Les circuits électroniques ne sont pas visibles

0105069

sur les figures. Ils sont situés à l'intérieur du corps tournant 3 en arrière d'un tableau 28 où est rassemblé l'ensemble des organes de commande et de programmation. Ce tableau 28 est accessible sur un côté du corps tournant 3. Ce dernier est réalisé en métal; il constitue un véritable blindage de protection des circuits électroniques contre les parasites, contrairement à ce qui se passe avec les robots classiques. Avec ces derniers, les circuits électriques se trouvent dans une armoire espacée du robot. Cette armoire peut bien être blindée mais il est difficile de bien protéger contre les parasites les divers câbles qui consuisent les signaux aux organes du robot entre celui-ci et l'armoire. En outre, ces cables limitent la possibilité de rotation du robot sur lui-même. L'invention élimine à la fois ces deux inconvénients.

Le corps tournant 3 assure aussi une protection mécanique des circuits électroniques contre le milieu environnant qui est susceptible d'être chargé de poussières et d'abrasif, notamment quand il s'agit d'un robot travaillant à des opérations de sablage.

Il entre aussi dans le cadre de l'invention de loger à l'intérieur du corps 3 les appareils hydrauliques nécessaires au fonctionnement afin de les protéger de la même façon.

0105069

## REVENDICATIONS

1. Robot de manipulation comprenant un socle fixe (1), un corps (3) monté sur le socle (1) pour tourner autour d'un axe géométrique général (2), un bras (10) articulé étant monté sur ce corps (3), un joint tournant (11) assurant la transmission du fluide hydraulique et du courant électrique entre le socle (1) et le corps (3), caractérisé en ce que le corps (3) a un volume suffisant pour contenir en plus du joint tournant (11) tous les circuits électroniques de commande et de contrôle des mouvements du robot et les appareils hydrauliques nécessaires.

2. Robot selon la revendication 1 caractérisé en ce que le corps (3) porte sur un côté un tableau (28) des organes de commande et de programmation du robot.

3. Robot selon la revendication 2 caractérisé en ce que les circuits électroniques situés à l'intérieur du corps (3) sont disposés en arrière du tableau (28) de commande et de programmation.

4. Robot selon la revendication 1 caractérisé en ce que le corps (3) est réalisé de manière à constituer un blindage de protection des circuits électroniques contenus à l'intérieur de ce corps.

5. Robot selon l'une quelconque des revendications 1 à 4 caractérisé en ce que le corps (3) a une face supérieure servant à supporter une chape (8) qui porte l'axe (9) d'articulation du bras (10).

6. Robot selon la revendication 5 caractérisé en ce que la chape (8) est excentrée sur la face supérieure du corps (3) par rapport à l'axe géométrique général (2).

7. Robot de manipulation comprenant un socle fixe (1), un corps (3) monté sur le socle (1) pour tourner autour d'un axe géométrique général (2), un bras (10) articulé étant monté sur ce corps (3), un joint tournant (11) assurant la transmission du fluide hydraulique et du courant électrique entre le socle (1) et le corps (3), caractérisé en ce que le bras (10) est articulé sur la face supérieure du corps (3) autour d'un axe (9) qui est de

0105069

préférence excentré par rapport à l'axe géométrique général (2), ce corps (3) ayant un volume suffisant pour contenir en plus du joint tournant (11) tous les circuits électroniques de commande et de contrôle des mouvements du robot et portant sur un côté un tableau (28) des organes de commande et de programmation du robot en arrière duquel sont disposés lesdits circuits électroniques intérieurs, ce corps (3) étant réalisé de manière à constituer un blindage de protection des circuits électroniques contenus à l'intérieur de ce corps.

0105069

1/2

Fig.1

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | LE NOUVEL AUTOMATISME, vol. 27, no. 31, juin 1982, pages 39,41, Paris, FR. J. TOURLIAC et al.: "Robot de manutention BRM" * Page 40, colonne 1 * | 1-7 | B 25 J 9/00 |
| E | FR-A-2 510 023 (SOCIETE PHAREMME) * Revendications 1,2,6,7; page 4, ligne 39 - page 5, ligne 7 * | 1-7 | |
| Y | GB-A- 781 465 (KENWARD) * Figure 1, page 3, ligne 63 - page 4, ligne 129 * | 1 | |
| Y | US-A-2 822 094 (GREER) * Colonne 3, ligne 21 - colonne 4, ligne 54 * | 1 | DOMAINES TECHNIQUES RECHERCHES (Int. Cl. 3) |
| Y | US-A-3 648 143 (HAPRER et al.) * Colonne 4, lignes 6-8; revendications 1,14 * | 1,4 | B 25 J 9/00 B 25 J 11/00 B 25 J 15/00 B 25 J 17/00 |
| Y | DE-A-3 045 094 (KERNFORSCHUNGSZENTRUM KARLSRUHE) * Page 14, ligne 11 - page 15, ligne 6 * | 1-7 | |

--- -/-

Le présent rapport de recherche a été établi pour toutes les revendications

| Lieu de la recherche LA HAYE | Date d'achèvement de la recherche 09-06-1983 | Examinateur LAMMINEUR P.C.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                  

& : membre de la même famille, document correspondant

OEB Form 1503. 03.82

Office européen
des brevets

0105069

Numéro de la demande

EP 82 40 1819

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 450 673 (JUNGHEINRICH)<br>* Figures 1,2; page 7, ligne 38 - page 8, ligne 4 *<br><br>----- | 5 | |
| | | | **DOMAINES TECHNIQUES RECHERCHES (Int. Cl. ³)** |

Le présent rapport de recherche a été établi pour toutes les revendications

| Lieu de la recherche<br>LA HAYE | Date d'achèvement de la recherche<br>09-06-1983 | Examinateur<br>LAMMINEUR P.C.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82